Europäisches Patentamt

European Patent Office

Office européen des brevets

(11) Veröffentlichungsnummer: **0 109 603**

**A1**

(12) **EUROPÄISCHE PATENTANMELDUNG**

(21) Anmeldenummer: **83111104.2**

(22) Anmeldetag: **07.11.83**

(51) Int. Cl.³: **F 25 B 33/00**
**B 01 D 1/04**

(30) Priorität: **22.11.82 DE 3243070**

(43) Veröffentlichungstag der Anmeldung:
**30.05.84** Patentblatt **84/22**

(84) Benannte Vertragsstaaten:
**DE GB NL**

(71) Anmelder: **SIEMENS AKTIENGESELLSCHAFT**
**Berlin und München Wittelsbacherplatz 2**
**D-8000 München 2(DE)**

(72) Erfinder: **Gromoll, Bernd, Dr.**
**Schillerstrasse 8**
**D-8520 Erlangen(DE)**

(54) **Austreiber.**

(57) Austreiber (2), insbesondere für eine Absorptionswärmepumpe, zum Austreiben eines in einer Lösung (4) gelösten Mediums mit einem Lösungsführungssystem und mit
einem Heizrohrsystem. Erfindungsgemäß enthält das
Lösungsführungssystem mehrere hintereinander angeordnete Wehre (6), in denen jeweils mindestens ein Heizrohr (8)
des Heizrohrsystems angeordnet ist, das wenigstens teilweise an seinem gesamten Umfang von der Lösung (4) umgeben ist. Durch diese Gestaltung werden die Vorteile des
Rieselaustreibers mit denen des Austreibers mit Lösungsfüllung in einer Vorrichtung verwirklicht.

FIG 1

EP 0 109 603 A1

0109603

SIEMENS AKTIENGESELLSCHAFT  Unser Zeichen
Berlin und München  VPA 82 P 3349 E

Austreiber

Die Erfindung bezieht sich auf einen Austreiber, insbesondere für eine Absorptionswärmepumpe, zum Austreiben eines in einer Lösung gelösten Mediums mit einem Lösungsführungssystem, das in hintereinandergeschaltete Stufen aufgeteilt ist, und mit einem Heizrohrsystem, bei dem am Heizmitteleintritt die in Fließrichtung der Lösung gesehene letzte Stufe angeordnet ist.

Es ist ein Austreiber mit einer ruhenden Lösungsfüllung ohne eindeutige Lösungsführung bekannt. Dieser Austreiber ist als liegender oder stehender lösungsgefüllter Kessel ausgeführt und das Heizsystem befindet sich im Kessel. Dieser hat eine große Lösungsfüllung, die beim Anfahren nach längerem Stillstand für die Aufheizung der Lösung eine entsprechend lange Anfahrzeit benötigt. Auch die Anpassung an veränderliche Betriebsbedingungen, etwa bei veränderlicher Kühlwassertemperatur oder Änderung der Verdampfungstemperatur, erfordert eine längere Zeit. Der Vorteil dieses Austreibers besteht darin, daß diese große Lösungsfüllung einen gleichmäßigen und stabilen Betrieb bei Schwankungen im Heizdampfdruck und in der Dampfmenge ermöglicht, da sie ausgleichend wirkt (Handbuch der Kältetechnik, Bd. 7, 1959, Seite 327).

Bei diesem lösungsgefüllten Kessel müssen sich jedoch die entstehenden Dampfblasen durch die darüberstehende Flüssigkeitssäule hindurchzwängen, was Druckverluste

Ur 2 Hag / 18.11.1982

zur Folge hat. Die unten befindliche Lösung hat
einen etwas höheren Druck als der oben abströmende
Dampf, so daß diese Lösung, bezogen auf eine gleiche
Austrittstemperatur, eine etwas höhere Konzentration
hat, als sie ohne diesen Druckverlust haben würde. Vor
allem ist aber bei dieser Bauart keine eindeutige
Führung der Lösung im Kessel möglich. Es kann sich
also die zuströmende reiche Lösung mit der im Kessel
befindlichen armen Lösung mischen.

Weiter ist ein Riesel- oder Filmaustreiber bekannt,
bei dem man die entgasende Lösung längs einer Heizfläche als dünnen Film herabrieseln läßt. Bei dieser
Bauart ist keine Mischung von reicher Lösung und armer
Lösung mehr möglich. Die abströmende arme Lösung hat
eindeutig die Konzentration, die dem Austreiberdruck
und der Temperatur der armen Lösung entspricht. Aus
dem herabrieselnden Lösungsfilm können sich die durch
Wärmezufuhr entstandenen Dampfblasen leicht ablösen;
es findet kein Druckverlust und kein Siedeverzug
statt. Dieser Rieselaustreiber kommt mit der geringstmöglichen Lösungsfüllung aus und kann sich daher
auch sehr schnell veränderlichen Betriebsverhältnissen
anpassen. Außerdem kann er schnell vom Stillstand auf
volle Leistung gebracht werden (Handbuch der Kältetechnik, Bd. 7, 1959, Seite 328).

Ein Problem bei diesem Rieselaustreiber besteht darin,
daß für eine gleichmäßige Beaufschlagung der Heizfläche durch den Rieselfilm gesorgt werden muß. Die
gleichmäßige Beaufschlagung ist lageabhängig und
erfordert deshalb eine sehr genaue Aufstellung des
Austreibers.

Bei einem weiteren Austreiber, insbesondere für eine
Absorptionswärmepumpe, durchströmt die Lösung ein in
hintereinandergeschaltete Stufen aufgeteiltes Leitungssystem, das mit einer Rauchgasführung beheizt
wird. Der Rauchgaseintritt ist an der in Fließrichtung der Lösung gesehen letzten Stufe angeordnet und
jede in Fließrichtung gesehen folgende Stufe ist
tiefer angeordnet als die vorhergehende Stufe. Die
Mittelachse der Rauchgasführung verläuft entsprechend
der Abtreppung geneigt und die Siederohre verlaufen
senkrecht zu dieser Mittelachse (deutsche
Offenlegungsschrift 29 50 327).

Der Erfindung liegt nun die Aufgabe zugrunde diese
bekannten Austreiber zu verbessern, insbesondere
sollen die Vorteile des Rieselaustreibers mit denen
des Austreibers mit Lösungsfüllung in einer Vorrichtung verwirklicht werden.

Die Aufgabe wird erfindungsgemäß gelöst mit den kennzeichnenden Merkmalen des Anspruchs 1. Durch das
Lösungsführungssystem, das aus mehreren hintereinander
angeordneten Wehren besteht, wird wenigstens annähernd
die Heizfläche eines Rieselaustreibers erreicht. Je
mehr Wehre für das Lösungsführungssystem vorgesehen
sind, um so besser wird die Annäherung an die Heizfläche eines Rieselaustreibers erreicht. In den Wehren
ist jeweils mindestens ein Heizrohr des Heizrohrsystems angeordnet, das wenigstens teilweise an seinem
gesamten Umfang von der Lösung umgeben ist. Damit die
Heizrohre immer wenigstens teilweise an ihrem gesamten
Umfang von der Lösung umgeben sind, können die Heizrohre mit Abstandshaltern versehen sein. Diese Abstandshalter können zweckmäßig zwischen dem Heizrohr
und dem Boden und dem Heizrohr und der Stauwand jeweils eines Wehres vorgesehen sein. Durch diese Maßnahme wird erreicht, daß die Lösung in den Wehren jeweils ständig durchmischt wird und keine Schichtung der Lösung besteht. Außerdem ist durch eine entsprechende Neigung des Austreibers gewährleistet, daß die Wehre mit einer verhältnismäßig geringen und konstanten Füllung versehen sind, wodurch eine gute Anpassung an veränderte Betriebsbedingungen und eine stabile Betriebsweise erreicht wird.

In einer bevorzugten Ausgestaltung der Erfindung ist jeweils die Stauwand im Bereich des Bodens mit wenigstens einer kleinen Bohrung versehen, die von Wehr zu Wehr in der Fließrichtung der Lösung jeweils abwechselnd seitlich gegeneinander versetzt sind. Diese Bohrungen sind so bemessen, daß im Betrieb des Austreibers die Menge der herabrieselnden reichen Lösung um ein Vielfaches mehr ist, als die durch die Bohrungen ablaufende Menge. Im Betriebsstillstand läuft der Austreiber durch diese Bohrungen allmählich leer. Durch die versetzte Anordnung der Bohrungen entsteht in jedem Wehr eine Querströmung, die auch dazu beiträgt, daß keine Schichtung der Lösung entsteht.

Durch geeignete konstruktive Gestaltungsmerkmale wird dafür gesorgt, daß die Heizrohre sowohl vom Boden des Austreibers als auch von der Stauwand des betreffenden Wehres einen ausreichenden Abstand haben. Dies erreicht man beispielsweise durch Ringe oder Flausche, welche auf den Heizrohren angeordnet sind. Ferner kann ein ausreichender Abstand für die Strömung der Lösung
in den Wehren beispielsweise dadurch erreicht werden,
daß der Boden des Austreibers und die Stauwand jeweils
eines Wehres aus einem Profilblech bestehen. Durch
diese Gestaltung ist das Heizrohr eines Wehres
des Heizrohrsystems jeweils wenigstens teilweise an
seinem gesamten Umfang von der Lösung umgeben.

Zur weiteren Erläuterung wird auf die Zeichnung Bezug
genommen, in der ein Ausführungsbeispiel eines Austreibers nach der Erfindung schematisch veranschaulicht ist.
Figur 1 zeigt einen Austreiber gemäß der Erfindung und
        in
Figur 2 ist eine vorteilhafte Ausführungsform der Erfindung dargestellt.
Figur 3 veranschaulicht eine weitere Ausführungsform
        der Erfindung.

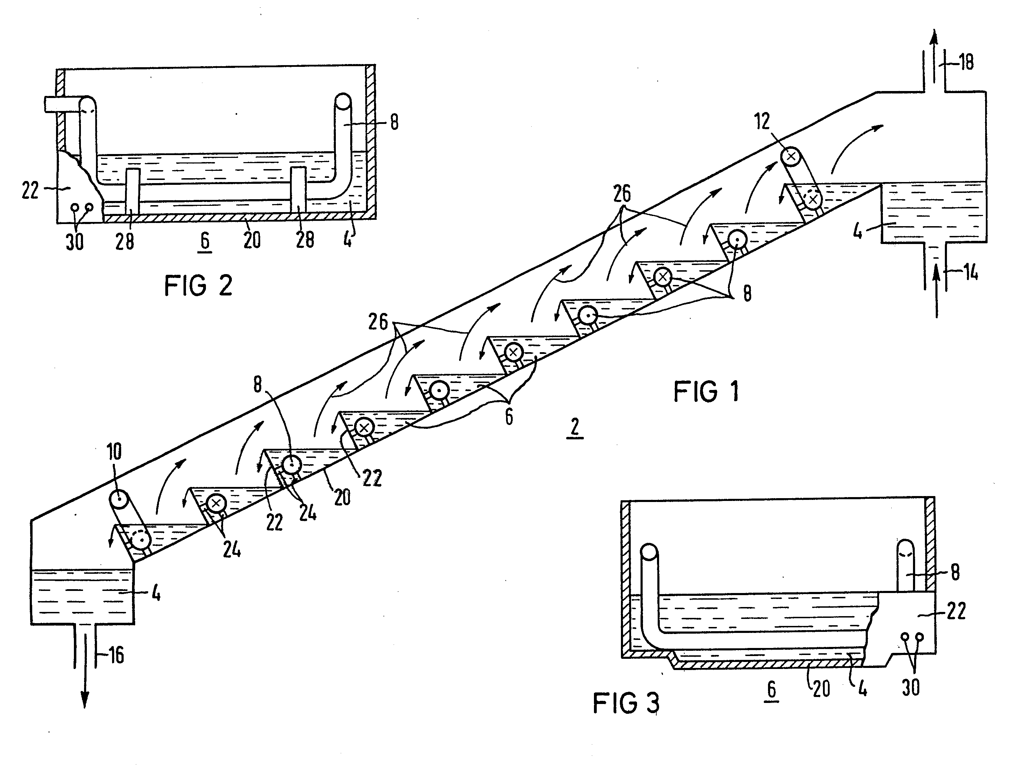

In der Ausführungsform nach Figur 1 enthält ein Austreiber 2, insbesondere für eine Absorptionswärmepumpe zum Austreiben eines in einer Lösung 4 gelösten
Mediums, ein Lösungsführungssystem, das aus mehreren
hintereinander angeordneten Wehren 6 besteht, und ein
Heizrohrsystem, das aus wenigstens einer Heizschlange
besteht. In den Wehren 6 ist jeweils mindestens ein
Heizrohr 8 angeordnet. Die Wehre 6 bilden jeweils eine
Stufe des Lösungsführungssystems. Von den hintereinandergeschalteten Stufen der Wehre 6 ist jeweils die
in Fließrichtung gesehen folgende Stufe tiefer angeordnet als die vorhergehende Stufe. Bei dem
Heizrohrsystem ist ein Heizmitteleintritt 10 an der in
Fließrichtung der Lösung 4 gesehen letzten Stufe
angeordnet. Ein Heizmittelaustritt 12 ist bei der in
Fließrichtung der Lösung 4 gesehen ersten Stufe vor-

gesehen. Vor der ersten Stufe befindet sich ein Zulauf 14 der reichen Lösung und hinter der letzten Stufe ist ein Ablauf 16 der armen Lösung vorgesehen; Oberhalb des Zulaufs 14 der reichen Lösung ist ein Abzug 18 des ausgedampften Kältemittels angeordnet. In den hintereinander angeordneten Wehren 6 ist jeweils mindestens ein Heizrohr 8 des Heizrohrsystems so angeordnet, daß das Heizrohr 8 wenigstens teilweise an seinem gesamten Umfang von der Lösung 4 umgeben ist. Zwischen dem Heizrohr 8 und einem Boden 20 und zwischen dem Heizrohr 8 und einer Stauwand 22 jeweils eines Wehres 6 sind Abstandshalter 24 vorgesehen. Als Beheizung der Lösung 4 ist eine in der Figur nicht dargestellte indirekte Beheizung durch ein Heizmittel vorgesehen. Beim Durchfließen der Lösung 4 durch die einzelnen hintereinander angeordneten Wehre 6 erwärmt sich die Lösung 4 stetig. Dabei wird jeweils ein Teil des in der Lösung 4 absorbierten Kältemittels ausgetrieben und über den Abzug 18 abgezogen. Die Austreibung des absorbierten Mittels aus der Lösung 4 ist durch die Pfeile 26 in der Figur angedeutet.

Durch diese Gestaltung erfolgt die Austreibung des Mittels aus der Lösung 4 von Stufe zu Stufe kontinuierlich, wobei die Lösungsmitteltemperatur kontinuierlich ansteigt. Durch eine Führung von Heizmittel und Lösung 4 im Gegenstrom erhält man eine eindeutige Zuordnung von Konzentration, Druck und Temperatur. Außerdem findet zwischen der herabrieselnden Lösung 4 und dem von unten aufsteigenden Dampf eine Vorrektifikation derart statt, daß durch den Wärme- und Stoffaustausch zwischen Dampf und Lösung 4 die Dampfkonzentration am Abzug 18 mit der Konzentration der zulaufenden reichen Lösung im Gleichgewicht steht. Durch diese Gestaltung erhält man somit sowohl die Vorteile des Rieselaustreibers, nämlich kontinuierliche Austreibung des absorbierten Mittels aus der Lösung 4, keine Mischung von reicher und armer Lösung und geringe, konstante Lösungsfüllung, als auch die Vorteile des Austreibers mit Lösungsfüllung, nämlich gleichmäßiger und stabiler Betrieb.

In einer besonders vorteilhaften Ausführungsform nach Figur 2 ist das Heizrohr 8 des Wehres 6 mit wenigstens zwei Ringen 28 versehen. Außerdem ist die Stauwand 22 des Wehres 6 mit kleinen Bohrungen 30 versehen, die in der Fließrichtung der Lösung 4 jeweils abwechselnd seitlich gegeneinander versetzt sind. Diese Bohrungen 30 sind so bemessen, daß im Betrieb des Austreibers 2 die Menge der herabrieselnden reichen Lösung 4 um ein Vielfaches größer ist als die durch die Bohrungen ablaufende Menge. Die Durchmesser der Bohrungen 30 werden deshalb beispielsweise etwa 1 bis 5 mm, vorzugsweise etwa 2 mm, gewählt. Im Betriebsstillstand dagegen läuft der Austreiber 2 durch diese Bohrungen langsam leer. Außerdem erreicht man durch die versetzte Anordnung der Bohrungen 30, daß in jedem Wehr 6 eine Querströmung entsteht. Durch die Ringe 28 ist das Heizrohr in einem vorbestimmten Abstand zur Stauwand 22 und zum Boden 20 jeweils eines Wehres 6 angeordnet. Somit wird jeweils das Heizrohr 8 wenigstens teilweise an seinem gesamten Umfang von der Lösung 4 umgeben, wodurch eine Längsströmung in jedem Wehr 6 entsteht. Diese Quer- und Längsströmungen tragen dazu bei, daß eine Schichtung der Lösung 4 in den Wehren 6 vermieden wird.

In einer weiteren vorteilhaften Ausführungsform nach Figur 3 besteht der Boden 20 des Austreibers 2 und die Stauwand 22 jeweils eines Wehres 6 aus einem Profilblech. Das Profilblech ist so geformt, daß das Heizrohr 8 rechts und links im Wehr 6 auf dem Boden 20 angeordnet ist, aber sonst genügend Platz zwischen dem Heizrohr 8 und dem Boden 20 vorhanden ist, damit das Heizrohr 8 wenigstens teilweise an seinem gesamten Umfang von der Lösung 4 umgeben ist. Auch bei dieser Ausführungsform sind in der Stauwand 22 kleine Bohrungen 30 angeordnet.

13 Patentansprüche
 3 Figuren

Patentansprüche

1. Austreiber (2), insbesondere für eine Absorptionswärmepumpe, zum Austreiben eines in einer Lösung (4)
gelösten Mediums mit einem Lösungsführungssystem, das
in hintereinandergeschaltete Stufen aufgeteilt ist,
und mit einem Heizrohrsystem, bei dem am
Heizmitteleintritt (10) die in Fließrichtung der
Lösung (4) gesehene letzte Stufe angeordnet ist,
d a d u r c h g e k e n n z e i c h n e t , daß
das Lösungsführungssystem mehrere hintereinander
angeordnete Wehre (6) enthält, in denen jeweils
mindestens ein Heizrohr (8) des Heizrohrsystems
angeordnet ist, das wenigstens teilweise an seinem
gesamten Umfang von der Lösung (4) umgeben ist.

2. Austreiber (2) nach Anspruch 1, d a d u r c h
g e k e n n z e i c h n e t , daß die Heizrohre (8)
mit Abstandshaltern (24) versehen sind.

3. Austreiber (2) nach Anspruch 1 oder 2, d a -
d u r c h g e k e n n z e i c h n e t , daß
zwischen dem Heizrohr (8) und dem Boden (20) sowie
zwischen dem Heizrohr (8) und einer Stauwand (22)
jeweils eines Wehres (6) Abstandshalter (24)
vorgesehen sind.

4. Austreiber (2) nach Anspruch 1, d a d u r c h
g e k e n n z e i c h n e t , daß jeweils das
Heizrohr (8) eines Wehres (6) mit wenigstens zwei
Ringen (28) versehen ist.

-10-    VPA 82 P 3349 E

5. Austreiber (2) nach Anspruch 1, d a d u r c h
g e k e n n z e i c h n e t , daß der Boden (20) des
Austreibers (2) und die Stauwand (22) jeweils eines
Wehres (6) aus einem gewellten Blech besteht.

6. Austreiber (2) nach Anspruch 1, d a d u r c h
g e k e n n z e i c h n e t , daß der Boden (20) des
Austreibers (2) und die Stauwand (22) jeweils eines
Wehres (6) aus einem Profilblech besteht.

7. Austreiber (2) nach Anspruch 1, d a d u r c h
g e k e n n z e i c h n e t , daß das Wehr (6) der
jeweils in Fließrichtung gesehen folgenden Stufe
tiefer angeordnet ist als das der vorhergehenden
Stufe.

8. Austreiber (2) nach einem der Ansprüche 1 bis 7,
d a d u r c h g e k e n n z e i c h n e t , daß
die Stauwand (22) der Wehre (6) in der Nähe des Bodens
(20) jeweils mit wenigstens einer Öffnung versehen
ist.

9. Austreiber (2) nach Anspruch 8, d a d u r c h
g e k e n n z e i c h n e t , daß als Öffnungen
kleine Bohrungen (30) vorgesehen sind.

10. Austreiber (2) nach Anspruch 9, d a d u r c h
g e k e n n z e i c h n e t , daß die Bohrungen (30)
von Wehr (6) zu Wehr (6) in der Fließrichtung der
Lösung (4) jeweils abwechselnd seitlich gegeneinander versetzt angeordnet sind.

11. Austreiber (2) nach Anspruch 1, d a d u r c h
g e k e n n z e i c h n e t , daß eine indirekte Beheizung der Lösung (4) vorgesehen ist.

12. Austreiber (2) nach Anspruch 1, d a d u r c h
g e k e n n z e i c h n e t , daß das Heizrohrsystem
aus mindestens einer Heizschlange besteht.

13. Austreiber (2) nach Anspruch 1, g e k e n n -
z e i c h n e t durch einen Gegenstrom zwischen ausgetriebenem Dampf und der Lösung (4).

FIG 1

FIG 2

FIG 3

0109603

**Europäisches Patentamt**

# EUROPÄISCHER RECHERCHENBERICHT

Nummer der Anmeldung

EP 83 11 1104

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | WO-A-8 200 598 (BATTELLE)<br><br>* Seite 8, Zeile 27 - Seite 9, Zeile 33; Figuren 2,3 * | 1,2,7, 11-13 | F 25 B 33/00<br>B 01 D 1/04 |
| Y | US-A-2 038 088 (SEBALD)<br><br>* Seite 2, linke Spalte, Zeile 56 - Seite 3, linke Spalte, Zeile 35; Figuren 1-3 * | 1,2,7, 11-13 | |
| A | US-A-2 038 002 (RIS)<br>* Seite 2, linke Spalte, Zeile 46 - Seite 5, linke Spalte, Zeile 41; Figuren 1-14 * | 1,2 | |
| A | US-A-1 819 832 (WILLIAMS)<br>* Seite 1, Zeile 53 - Seite 2, Zeile 68; Figuren 1-5 * | 1,7-10 | RECHERCHIERTE SACHGEBIETE (Int. Cl. 3) |
| A | EP-A-0 001 296 (TRÜMPER)<br><br>* Seite 12, Zeile 21 - Seite 17, Zeile 21; Figuren 3,4 * | 1,7,11 ,12 | F 25 B<br>B 01 D<br>F 28 D<br>F 24 J |
| A | DE-C- 375 613 (TUREK)<br><br>* Insgesamt *<br><br>--- -/- | 1,7,11 -13 | |

Der vorliegende Recherchenbericht wurde für alle Patentansprüche erstellt.

| Recherchenort | Abschlußdatum der Recherche | Prüfer |
|---|---|---|
| DEN HAAG | 28-02-1984 | BOETS A.F.J. |

# EUROPÄISCHER RECHERCHENBERICHT

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-1 816 133 (TRAUTMANN) <br> * Seite 2, Zeile 61 - Seite 3, Zeile 44; Figuren 1,2 * | 2,3 | |
| P,X | DE-A-3 124 796 (BROWN BOVERI) <br><br> * Seite 8, Absatz 3 - Seite 12, erster Absatz; Figuren 1-7 * | 1,2,6, 7,11, 12 | |
| A | DE-C- 89 295 (KRACK) <br> * Seite 1, rechte Spalte, letzter Absatz - Seite 2, linke Spalte, erster Absatz; Figuren 1,2 * | 8-10 | |
| A | GB-A- 386 811 (ELECTROLUX) | | |
| A | US-A-2 203 207 (SMITH) | | |
| A | FR-A- 341 297 (LEFEVRE) | | |

RECHERCHIERTE SACHGEBIETE (Int. Cl. ³)

Der vorliegende Recherchenbericht wurde für alle Patentansprüche erstellt.

| Recherchenort | Abschlußdatum der Recherche | Prüfer |
|---|---|---|
| DEN HAAG | 28-02-1984 | BOETS A.F.J. |